# EUROPEAN PATENT APPLICATION

(11) **EP 3 493 350 A1**
(43) Date of publication of application: **05.06.2019**
(21) Application number: 17382825.2
(22) Date of filing: 01.12.2017
(51) Int. Cl.: H02J 3/00, H02J 3/46, H02J 13/00

(54) **SYSTEM AND METHOD FOR ENERGY DISTRIBUTION IN A PEER-TO-PEER ENERGY NETWORK**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES); Pilaszanovich, Jakab, 28013 Madrid (ES)
(74) Representative: Carlos Hernando, Borja

(57) **Abstract**

The system comprising a plurality of devices (50) installed in a given node of the energy network (25) adapted and configured to provide information (34) associated to each device (51, 52, 53) to a computing system (100) connected thereto; and said computing system (100) located in said given node and being further operatively connected with other computing systems located in neighbor nodes of the given node, wherein the computing system (100) comprising a processing unit adapted and configured to create an usage profile of each device (51, 52, 53) of the plurality of devices (50) by applying a machine learning algorithm to said information (34) provided by each device (51, 52, 53) and to external data (33) of the node.

## Description

### Field of the invention

The present invention generally relates to distributed energy networks. In particular, present invention relates to a system, and to a method, for energy distribution in a peer-to-peer energy network, wherein such kind of energy networks enable networked nodes to exchange energy, preferably electrical energy, to match distributed energy generation, storage and/or loads.

### Background of the invention

There are two types of electrical energy networks deployed in the world today: centralized generation that reacts to user loads connected in a hierarchical, unidirectional distribution; and stand-alone small-scale, single-dwelling systems of generation (typically solar), storage, and minimal appliances. The centralized system suffers from significant up-front costs and lack of control to prevent cascading failures. The stand-alone systems are not cost-effective on a community scale. Consequently, there have been proposals for something in between that exchanges electrical energy among distributed generation and loads in a way modeled after the Internet and how it exchanges information.

An Internet-style electrical energy distribution enables peer-to-peer energy trading and the decentralized architecture enables the network to grow organically from the bottom up, providing the scale unattainable with stand-alone systems and avoiding the upfront investments and planning of a traditional centralized electrical energy distribution system. But with the opportunity comes complexity and structure is needed in order to manage that complexity. The Internet uses a layered model, the most common of which is the well-known TCP/IP (Transmission Control Protocol / Internet Protocol) stack. The architecture presented in this patent application is an analogous layered approach for general energy networks.

A layered approach to electrical energy distribution was mentioned in the following scientific document B. Nordman and K. Christensen, "DC Local Power Distribution with microgrids and nanogrids," 2015 IEEE First International Conference on DC Microgrids (ICDCM), Atlanta, GA, 2015, pp. 199-204.

In that document, Nordman and Christensen focus only on electricity distribution within a building, not a generalized approach to connect nodes at different scales as described in present invention. The system comprises a single controller per "nanogrid" which communicates directly with loads and local generation, and also has a connection to the larger power grid. They recommend five layers, from the top down: 5. Functional coordination; 4. Device discovery and events 3. Internal integration; 2. Exchange within/between grids; 1. Transport of electrons. The focus of the functions at these layers is to predict and prioritize electricity supply and demand at the local node and determine when to get energy from the conventional grid. Layers 1 and 2 address power distribution. How the local controller coordinates with other controllers or the power grid is explicitly out of scope of the design. Layers 3 and 4 implement device functionality. No information is exchanged between devices at layer 3.

A different technology is proposed in EP-B1-2430723. This design addresses trading between nodes and discusses routing and forwarding of what they call energy packets. An end-to-end route through the networks is determined and a specific amount of electrical energy is contracted to flow over that route.

The main problem with the network-focused solutions mentioned above is that they are very specific solutions to very specific problems and they are not sufficiently flexible to address the broader range of energy distribution problems. The network needs to be flexible to evolve as new devices come with unforeseen characteristics or needs, as well as the network grows in size. Each of the previous technologies does not allow evolution.

Drawing from the experience of the Internet, it is known it is important for the layered organization be the same for the data as for the control. The prior art views the energy control as data and does not recognize that here energy takes the place of the data in the information network. Present invention needs both an energy plane and a control plane that follow the same structure. As a result, the devices in an energy network (generation, loads, and storage) go at the top.

As an example neither of the prior art technologies is capable of scheduling an energy transfer (either early retrieval for pre-caching energy or reserving energy for a future time) across an energy network of multiple sources and loads in a way that minimizes losses and congestion in the network. More specifically, in order to perform that scheduling, the system needs the following capabilities: (1) nodes with need or storage capacity need the ability to discover nodes with generation capabilities or stored energy (and vice versa); (2) nodes need to be able to specify a value or price for the energy that can change over the course of the day (or days) dependent on expected generation and storage levels and expected demands over the network; (3) nodes need to be able to prioritize loads (and storage) when not all demands can be met at a specific time; (4) nodes need to be able to calculate the costs (in terms of losses as well as potential monetary payments to trading partners) of the transfer of energy through the network; (5) nodes need to be able to monitor the status of the network and adapt to faults, congestion, underutilization, or other performance degradations; and (6) nodes need to automatically adapt as new nodes are added to the network, or as connections change or are removed. The energy network must do all of these, with appropriate interfaces and exchanges, to allow the system to grow and adapt.

Nordman and Christensen address an aspect of (2) but only loosely treat price as a non-binding estimate for future needs or availability. EP-B1-2430723 deals with (4) assuming a particular strategy for routing and forwarding electrical energy and assumes all other functions are solved separately (e.g., discovery, prediction, price-setting, reliability monitoring, etc.).

More solutions are therefore needed to optimize energy distribution in peer-to-peer energy networks, and in particular more solutions are needed to improve the way the different devices included in a node (e.g. generation, storage and/or loads) are used.

### Description of the Invention

Embodiments of the present invention provide according to an aspect a system for energy distribution in a peer-to-peer energy network comprising a plurality of connected nodes adapted for distributing energy between them.

The proposed system comprises a plurality of devices installed in a given node (e.g. a home) of the energy network which are adapted and configured to provide information associated to each device to a computing system connected thereto. The computing system, which is located also in the given node and is also operatively connected (i.e. can have communication) with other computing systems located in neighbor nodes of the given node, comprises a processing unit adapted and configured to create a usage profile (i.e. a profile related with the usage) of each of the devices installed in the given node.

To create the usage profiles the processing unit of the computing system applies or runs a machine learning algorithm (e.g. a supervised or unsupervised learning algorithm, deep neural networks, convolutional neural networks, etc.) to the information provided by each device and to external data of the node (for instance received from external sensors of the given node, from the neighbor nodes, etc.).

Preferably, the information associated to each device includes (not all is necessary) data indicative of the type of device, of a power level and/or of a power type (AC, DC, frequency), of and expected active time and/or of a total amount of time in which the device has been used, and the external data includes (not all is necessary) a time of day, a time of year, a temperature and/or humidity value, data on availability of electrical energy in the neighbor nodes and/or a current cost of the electrical energy.

In an embodiment, the usage profile of each device is further created by applying the machine learning algorithm to a set of configurable criteria defining preferences of the user. Preferably, the set of configurable criteria is indicated by the user through a user interface operatively connected with the computing system. The set of configurable criteria may comprise a relative value about a priority of the device, a value representing costs of the electrical energy amounted by the device, and a quality of service value indicating what characteristics are required for an adequate performance of the device (i.e. equal or above a given quality threshold).

In an embodiment, each device further includes a smart device management module adapted and configured to adjust a performance of the device based on the defined preferences, and optionally overrides of those preferences.

According to the proposed system, the plurality of devices comprises lighting systems and/or appliances such as televisions, radios, computers, washing machines, microwaves, ovens, fridges and/or refrigeration and/or heating equipment, among others. The plurality of devices can further comprise electrical energy generation elements such as solar panels, wind turbines, diesel generation systems, geothermal systems and/or a human-powered crank generator and/or electrical energy storage elements such as batteries and/or capacitors. In this last case, the information associated to each device can further include a total amount of electrical energy stored, a total amount of electrical energy generated and/or an amount for supplying and/or demanding electrical energy.

In an embodiment, the plurality of devices further has a control mechanism configured to automatically acquire electrical energy from the energy network if the costs of the electrical energy are below a given configurable threshold. In addition, the devices optionally further have a mechanism adapted and configured to override said control mechanism.

In yet another embodiment, the devices further include a display unit to at least provide information about its usage profile in a graphical or textual way. Even the devices could include some type of audio module to provide the information in an audible way.

Alternatively, the system can further include a user computing device (e.g. a Smartphone, a tablet, a PC, etc.) operatively connected with the computing system and configured to provide information about the created usage profile of each one of the plurality of devices. The above-described user interface by which the configurable criteria defining preferences of the user are set can be run in this user computing device.

Even, the information of the usage profile(s) could be provided by the computing device itself, e.g. via a display unit and/or via an audio interface thereof.

Preferably, in the proposed system the given node comprises a layered stack model to perform the electrical energy distribution. Each stack model may comprise a variable number of layers, being four the preferred number of layers. The plurality of devices included in the given node are all preferably included at the top of the layered stack model. Moreover, each layer of the stack model comprises a control plane for exchanging control information between layers and nodes and an energy plane for exchanging actual (i.e. at a current period of time) energy among layers and nodes.

Present invention provides according to another aspect a method for energy distribution in a peer-to-peer energy network comprising a plurality of connected nodes. In particular, the proposed method comprises configuring each one of a plurality of devices installed in a given node of the energy network to provide information associated to each device to a computing system connected thereto, wherein the computing system is located in the given node and is also operatively connected with other computing systems located in neighbor nodes of the given node; receiving, by the computing system, external data of the node; and creating, via a processing unit of the computing system, a usage profile of each device of the plurality of devices by applying a machine learning algorithm to the information provided by each device and to the received external data.

Preferably, the information associated to each device includes data indicative of the type of device, of a power level and/or of a power type (AC, DC, frequency), of and expected active time (e.g. in a washing machine the cycle time; in a fridge the predicted energy consumption patterns) and/or of a total amount of time in which the device has been used, and the external data includes a time of day, a time of year, a temperature and/or humidity value, data on availability of electrical energy in the neighbor nodes and/or a current cost of the electrical energy.

In an embodiment, the computing system receives from a given device of the plurality of devices, and before the given device starts operating, a request to turn on. The computing device responds to said request taking into account a result of the created usage profile, for instance the response could be that the given device is authorized to turn on, that is not authorize (for instance because another device is also requesting electrical energy and has more priority, or because electrical energy is predicted to be available at a low-priced cost in the coming minutes), or that is authorized but it has to wait a certain period of time (for instance because another device is expected to be turned off or to have electrical energy stored).

In another embodiment, the computing system receives a request for electrical energy from a given device of the plurality of devices and further transfers an amount of electrical energy to the given device if the amount of electrical energy left in the device is below a given threshold. Alternatively, the computing system could offer a certain amount of electrical energy to a given device of the plurality of devices and further transfers the amount of electrical energy offered if an amount of electrical energy stored in the device is below a given threshold.

Because the plurality of devices and the external data can be received every certain period of time (for instance every minute, every five minutes, every hour, etc.) or whenever updated information and/or external data is/are known, the computing system can continuously create new usage profiles for said devices and comparing them with the previous usage profiles, generating an updated usage profile.

Moreover, the computing system can also generate a measure of relative priority among the created usage profiles by further creating the usage profiles using a set of configurable criteria defining preferences of a user.

In an embodiment, information about the usage profile created for each device (or of the updated profile) is shown in a display unit included in each device. Alternatively, said information can be shown in a display unit of a user computing device (e.g. a mobile phone) operatively connected with the computing system.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached drawings, which must be considered in an illustrative and non-limiting manner, in which:
Fig. 1 is a schematic illustration of a layered stack model showing how the different elements included in a node of an energy network can be organized, in accordance with an embodiment.
Fig. 2 is a schematic illustration of the proposed system architecture, according to an embodiment.
Fig. 3 is a schematic illustration of an embodiment of the present invention.

### Detailed Description of the Invention and of Preferred Embodiments

Present invention provides a system and method for energy distribution in a peer-to-peer energy network 25 comprising a plurality of connected nodes (e.g. homes).

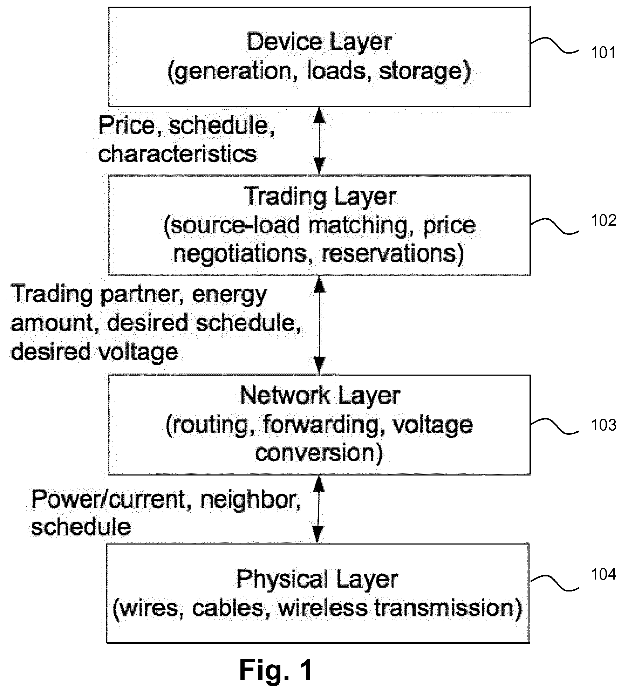

Fig. 1 illustrates an example of how the different elements included in a node can be organized. As shown in Fig. 1, the functions needed for reliable electrical energy delivery over a distributed energy network 25 are structured into a layered stack model, in this particular case comprising four layers 101, 102, 103, 104. According to the example of Fig. 1, at the top of the stack model is the Device Layer, or first layer, 101 including devices 50 such as electrical energy generation elements 53 (e.g., solar panels, wind turbines, diesel generators, etc.), electrical energy loads 51 (e.g., lights and/or appliances such as radios, televisions, washing machines, etc.) and electrical energy storage elements 52 (batteries, capacitors, etc.) which can act as both sources and loads, as appropriate. The next layer down is the Trading Layer, or second layer, 102 which matches sources of energy (e.g. electrical energy, or electricity) to destinations according to the cost and value two nodes have for certain amounts of energy at a particular time of day. This may include prediction of need and pre-ordering of energy, as well as pre-fetching of energy for storage and later use. Below the Trading Layer 102 is the Network Layer, or third layer 103, which defines the path(s) over which energy will flow and may include storage in components such as batteries or capacitors (among other possibilities) as well as translation to appropriate voltage levels. At the bottom of the stack is the Physical Layer, or fourth layer, 104 forming the transmission medium, which may comprise wires, fiber optics, or wireless energy transmission systems.

Although Fig. 1 shows four distinct layers, other stack models using more layers or fewer, could also be used. For example, the four layers could be collapsed into three by moving some functionalities of the Network Layer 103 into the Trading Layer 102 and into the Physical Layer 104. Or alternatively, the electrical energy storage elements 52 could be separated into a layer different from the electrical energy generation elements 53 and electrical energy loads 51. Moreover, it should be noted that the presence of electrical energy generation elements 53 and electrical energy storage elements 52 in a node is not mandatory. The basic configuration scheme of a node applies if there are only electrical energy loads 51 at the node, i.e. home appliances such as a television, a microwave, a fridge, etc. or lights or any type of refrigeration/heating system.

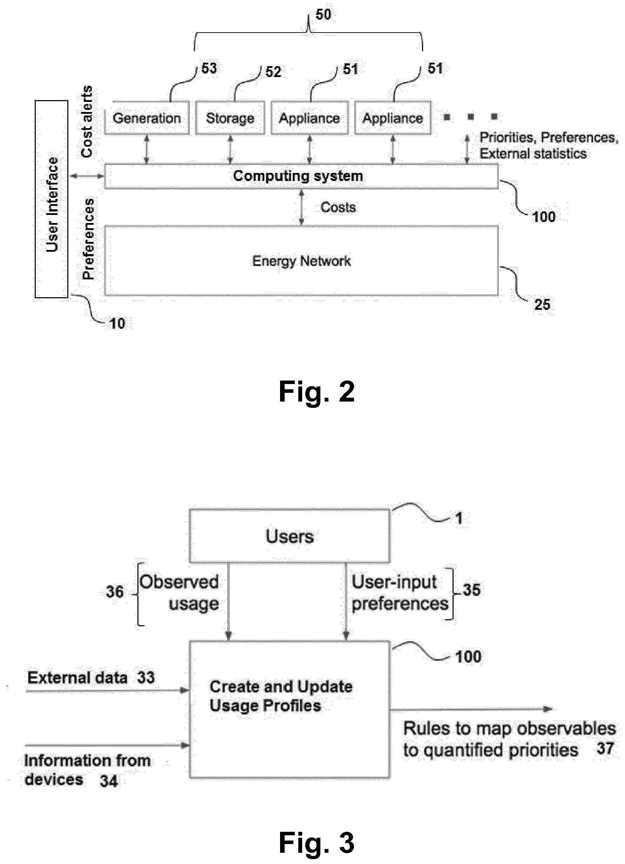

Fig. 2 schematically illustrates an embodiment of the proposed system architecture. According to this embodiment, the system comprises a plurality of devices 50 including a combination of electrical energy generation elements 53, electrical energy storage elements 52 and appliances 51. Moreover the system also includes a computing system 100 comprising at least one processing unit (not shown). A user interface 10 is also provided to allow a user 1 to set/configure its preferences regarding the use of the devices 50 and also about cost of the electrical energy to be supplied and/or demanded to other neighbor nodes of the energy network 25. The computing system 100 is also in touch with other computing systems located in other nodes of the energy network 25 and will also be the hub for other statistics e.g. electrical energy prices, availability forecasting, etc.

Like the applications of an information network, the devices 50 are where user interaction with the energy network 25 primarily takes place. There are two ways in which the user 1 can interact with the devices 50. One way is in how and when devices 50 are used. The other way is in configuring certain criteria such as priority, costs, and desired quality of services defining the preferences of the user 1. The configured priorities and costs represent what the user 1 believes the value of a particular device 50 to be, but the way in which the devices 50 are used, particularly when electrical energy is scarce, is an opportunity for the computing system 100 to learn what the true value is of these assets to the user 1.

Consequently, the devices 50 described here include a smart device management module adapted and configured to adjust performance of the device 51, 52, 53 based on the configured criteria. Optionally, the smart device management module can be also configured to override those preferences of the user 1.

The priorities, costs, and quality of service are set through the user interface 10 (for instance of a mobile phone, a tablet, a PC, or similar) that connects to the computing system 100 through a standard communications interface. Priorities represent a relative value about a priority of the different devices 51, 52, 53. The costs are what the user 1 believes the service is worth, be it providing electrical energy to others or how much the user 1 is willing to pay for powering a particular device 50. The costs may include factors such as how much the user 1 paid to purchase storage or generation capabilities, as well as any profit the user 1 seeks to earn by providing electrical energy to others. The quality of service indicates what service characteristics the user 1 requires for acceptable performance of a device 50 (e.g. compared to a given quality threshold) and may include factors such as intermittency of power supply, or other variations in power and/or service level.

The computing system 100 acts as a learning agent implementing machine learning techniques, or algorithms, (e.g. deep neural networks, convolutional neural networks, (un)supervised learning, etc.) to create a usage profile of each one of the devices 50 included in a node. To that end, the different devices 50 provide information 34 to the computing system 100, including data such as type of device 51, 52, 53, power level and/or power type, expected active time, total amount of time in which the device 51, 52, 53 has been used, level of preference (e.g. critical, whenever during this day, etc.), optimal and power conservation modes, etc. In addition, the computing system 100 to create said usage profile of each of the devices 50 also uses external data 33 of the node such as time of day, time of year, temperature and/or humidity, data on availability of electrical energy in the neighbor nodes and/or a current cost of the electrical energy. As the computing system 100 learns the preferences of the user 1, it can pass that information to the trading layer 102 to optimize trades for electrical energy.

With reference to Fig. 3 therein it is illustrated another embodiment of the present invention. In this case, besides using the received information 34 from each of the devices 50 and the external data 33 the computing system 100 to create the usage profiles also uses the above-described preferences 35 of the user 1 (i.e. priorities, costs, and quality of service) and, optionally, the observed usage of the devices 50 by the user 1. Moreover, according to this embodiment, the processing unit 100 continually compares the usage patterns of the devices 50 to created usage profiles and updates the profile boundaries accordingly, which may include creation of new updated profiles for the devices 50.

In another embodiment, in this case not illustrated, the processing unit 50 also generates measures of relative priority among the usage profiles.

In an embodiment, when the user 1 decides to switch on a given electrical energy load 51, e.g. a washing machine, this washing machine may want to consult first with the computing system 100 if it is ok to be turned on. In this case, the computing system 100 will respond to the washing machine in view of the usage profile created for the washing machine. For example the computing system 100 can respond: OK you are authorized to; you are authorized but hold a given period of time (e.g. because another device is expected to be soon done or because electrical energy is predicted to be available at a cheaper value); sorry you are not authorized because the refrigeration system is first; No electrical energy is available in the node, among many other messages. The decision taken by the computing system 100 is indicated to the user 1 either via a display unit of the washing machine, via a display unit or an acoustic unit of the computing device 100 or via the user interface 10 running, for example, in a mobile phone.

In another embodiment, the computing system 100, receives a request for electrical energy from a battery 52. For example "I need electrical energy" or "I need this XXX amount/quantity of electrical energy". The computing system 100 can respond to said request replying back "Can you wait?". In case the answer from the electrical storage element 52 is "No", i.e. the amount of electrical energy left in the device is below a given threshold or the device does not have any electrical energy stored at all, the computing system 100 transfers the requested electrical energy to the device.

Alternatively, it can be the computing system 100 who initiates the communication with the battery 52. For example, "I have this XXX amount of electrical energy, do you need it". To which the device can reply "Yes" or "No". If the device responds "Yes" the computing device 100 can further ask "Can you store it?". If the device responds "Yes" the computing system 100 transfers said amount to the device.

That is, in the proposed system devices 50 receive and follow instructions from the computing device 100.

As said before, the proposed system can include electrical energy generation elements 53 and electrical energy storage elements 52. With these devices 52, 53, the value is absolute and is most clearly associated with cost: how much can electrical energy that is generated be sold for; how much would one have to pay for electrical energy when the generator 53 is not producing it (and which sufficient storage to meet that later demand could alleviate). Estimating absolute cost requires interaction with the energy network 25 and its pricing mechanism to understand the fluctuation of electrical energy costs over time.

The devices 50 will have the ability to notify the user 1 about the cost of usage if electrical energy must be acquired. In a simple embodiment of the proposed system, the user 1 can set a threshold below which the devices 50 are always authorized to acquire electrical energy from the energy network 25, and above which the devices 50 are prohibited from acquiring electrical energy. The devices 50 may also include an override mechanism with which the user 1 can command the devices 50 to acquire electrical energy even if it costs more than the predefined threshold.

In an embodiment, the devices 50 also have an interface (not shown in the figures) that displays, either graphically or textually, statistics such as the current price of the electrical energy, average price over a previous time period, minimum and maximum prices over a previous time period. This interface can also provide information of the usage profile created and/or updated once received from the computing system 100.

The computing system 100 also allows for short term deviations from the long-term learned preferences. An example can be if a user 1 decides he needs extra money and is willing to forego his own usage of electrical energy and set the price for his sale of electrical energy produced by his electrical energy generation elements 53 favorably compared to the market in order to bring in extra revenue during a time period. But when the monetary need has been met, the user 1 can return the computing system 100 to the long-term learned preferences.

Another example involves the user 1 adapting the quality of service value if the available electrical energy is close but not sufficient to meet those requirements. This adaptation could be in a situation such as the full electrical energy is not available for lights, but a lower electrical energy setting could provide slightly dimmer light. If the reduced brightness is still acceptable (even if not preferred), the computing system 100 can adapt accordingly. Similarly, the computing system 100 may allow for larger variations in temperature for a heating or cooling system (including refrigeration).

Providing intelligence to the devices 50 and a standard interface for communicating among devices 50 also enables smart storage. One example of this capability is a battery 52 that can communicate with the computing system 100 to mitigate the effects of power cycling. This battery 52 design is able to measure the effects of multiple cycles of charging and discharging on its capacity and communicate with the energy network 25 to adapt decisions regarding how frequently the battery 52 is cycled in order to extend its useful lifetime.

On top of the devices 50, other information based devices can be connected to the computing system 100 to indicate/predict behavior. In this case, energy usage can be estimated from these usage patterns.
- WiFi router could report how many people are connected in the node and electrical energy usage will be a function of the number of people present.
- TV could report usage.
- TV could report events happening on the channel.
- Phone location - mobility patterns - to indicate when somebody is about to arrive to the node.

While the foregoing is directed to embodiments of the present invention, other and further embodiments of the invention may be devised without departing from the basic scope thereof. For example, other aspects may be implemented in hardware or software or in a combination of hardware and software. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is determined by the claims that follow.

## Claims

1. A system for energy distribution in a peer-to-peer energy network comprising a plurality of connected nodes, the system comprising:
a plurality of devices (50) installed in a given node of the energy network (25) adapted and configured to provide information (34) associated to each device (51, 52, 53) to a computing system (100) connected thereto; and
said computing system (100) located in said given node and being further operatively connected with other computing systems located in neighbor nodes of the given node,
wherein:
the computing system (100) comprising a processing unit adapted and configured to create an usage profile of each device (51, 52, 53) of the plurality of devices (50) by applying a machine learning algorithm to said information (34) provided by each device (51, 52, 53) and to external data (33) of the node,
the information (34) associated to each device (51, 52, 53) includes data indicative of the type of device (51, 52, 53), of a power level and/or of a power type, of and expected active time and/or of a total amount of time in which the device (51, 52, 53) has been used; and
the external data (33) includes some or all of the following: a time of day, a time of year, a temperature and/or humidity value, data on availability of electrical energy in the neighbor nodes and/or a current cost of the electrical energy.

2. The system of claim 1, wherein the usage profile of each device (51, 52, 53) being further created by applying the machine learning algorithm to a set of configurable criteria defining preferences (35) of a user (1), wherein the set of configurable criteria being indicated by the user (1) through a user interface (10) operatively connected with the computing system (100) and wherein the set of configurable criteria comprising a relative value about a priority of the device (51, 52, 53), a value representing costs of the electrical energy amounted by the device (51, 52, 53), and a quality of service value indicating what characteristics are required for an adequate performance of the device (51, 52, 53).

3. The system of claim 2, wherein each device (51, 52, 53) further including a smart device management module adapted and configured to adjust a performance of the device (51, 52, 53) based on the defined preferences, and optionally overrides of those preferences.

4. The system of previous claims, wherein:
the plurality of devices (50) further include a display unit to at least provide information about the created usage profile; or
the system further includes a user computing device operatively connected with the computing system (100) and configured to provide information about the created usage profile of each one of the plurality of devices (50).

5. The system of claim 1, wherein the plurality of devices (50) comprising lighting systems and/or appliances (51) including televisions, radios, computers, washing machines, microwaves, ovens, fridges and/or refrigeration and/or heating equipment.

6. The system of claim 5, wherein the plurality of devices (50) further comprising electrical energy generation elements (53) including solar panels, wind turbines, diesel generation systems, geothermal systems and/or a human-powered crank generator and/or electrical energy storage elements (52) including batteries and/or capacitors, and wherein the information associated to each device further comprising a total amount of electrical energy stored, a total amount of electrical energy generated and/or an amount for supplying and/or demanding electrical energy.

7. The system of claim 6, wherein the plurality of devices (50) further comprising a control mechanism configured to automatically acquire electrical energy from the energy network (25) if the costs of the electrical energy are below a given configurable threshold.

8. The system of claim 7, further comprising a mechanism adapted and configured to override said control mechanism.

9. A method for energy distribution in a peer-to-peer energy network comprising a plurality of connected nodes, the method comprising:
configuring each one of a plurality of devices (50) installed in a given node of the energy network (25) to provide information (34) associated to each device (51, 52, 53) to a computing system (100) connected thereto,
wherein the computing system (100) being located in said given node and being also operatively connected with other computing systems located in neighbor nodes of the given node;
receiving, by the computing system (100), external data (33) of the node; and
creating, via a processing unit of the computing system (100), a usage profile of each device (51, 52, 53) of the plurality of devices (50) by applying a machine learning algorithm to the information (34) provided by each device (51, 52, 53) and the received external data (33),
wherein the information (34) associated to each device (51, 52, 53) includes data indicative of the type of device (51, 52, 53), of a power level and/or of a power type, of and expected active time and/or of a total amount of time in which the device (51, 52, 53) has been used; and
wherein the external data (33) includes some or all of the following: a time of day, a time of year, a temperature and/or a humidity value, data on availability of electrical energy in the neighbor nodes and/or a current cost of the electrical energy.

10. The method of claim 9, wherein the plurality of devices (50) comprising a combination of electrical energy loads (51) including lighting systems and/or appliances, electrical energy generation elements (53) including solar panels, wind turbines, diesel generation systems, geothermal systems and/or a human-powered crank generator and/or electrical energy storage elements (52) including batteries and/or capacitors, and wherein the information associated to each device further comprising a total amount of electrical energy stored, a total amount of electrical energy generated and/or an amount for supplying and/or demanding electrical energy.

11. The method of any of claims 9 or 10, further comprising:
receiving, by the computing system (100), from a given device of the plurality of devices (50), and before the given device starts operating, a request to turn on; and
responding, by the computing device (100), to the given device taking into account a result of the created usage profile, wherein the response including authorizing the given device to turn on, not authorizing the given device to turn on, or authorizing the given device to turn on but after a certain period of time has elapsed.

12. The method of claim 10, further comprising:
receiving, by the computing system (100), a request for electrical energy from a given device of the plurality of devices (50), the computing system (100) further transferring an amount of electrical energy to the given device if the amount of electrical energy left in the device is below a given threshold; or
offering, by the computing system (100), a certain amount of electrical energy to a given device of the plurality of devices (50), the computing system (100) further transferring the amount of electrical energy offered if an amount of electrical energy stored in the device is below a given threshold.

13. The method of claim 9, wherein:
the computing system (100) comprises receiving the information (34) of the plurality of devices (50) and the external data (33) every a certain period of time or whenever new information (34) and external data (33) is known; and
the computing system (100) upon said reception creating a new usage profile for said given device and comparing the new usage profile created with the previous usage profile, generating an updated usage profile for the given device.

14. The method of claim 13, further comprising generating, by the computing system (100), a measure of relative priority among the created usage profiles by further creating the usage profiles using a set of configurable criteria defining preferences (35) of a user (1), wherein the set of configurable criteria being indicated by the user (1) through a user interface (10) operatively connected with the computing system (100) and wherein the set of configurable criteria comprising a relative value about a priority of the device, a value representing costs of the electrical energy amounted by the device, and a quality of service value indicating what characteristics are required for an adequate performance of the device.

15. The method of any of claims 9 to 14, further comprising:
showing information about the created usage profile or about the updated usage profile in a display unit included in the devices (50); or
showing information about the created usage profile or about the updated usage profile of each device (51, 52, 53) in a display unit of a user computing device operatively connected with the computing system (100).
